(19) Europäisches Patentamt
European Patent Office
Office européen des brevets

(11) **EP 1 316 780 B1**

(12) **EUROPÄISCHE PATENTSCHRIFT**

(45) Veröffentlichungstag und Bekanntmachung des Hinweises auf die Patenterteilung:
**28.12.2016 Patentblatt 2016/52**

(51) Int Cl.:
**B06B 3/00** (2006.01)    **G01F 1/66** (2006.01)

(21) Anmeldenummer: **02017136.9**

(22) Anmeldetag: **30.07.2002**

(54) **Ultraschall-Durchflussmessgerät**

Ultrasonic flow meter

Débitmètre ultrasonique

(84) Benannte Vertragsstaaten:
**AT BE BG CH CY CZ DE DK EE ES FI FR GB GR IE IT LI LU MC NL PT SE SK TR**

(30) Priorität: **28.11.2001 DE 10158205**
**11.02.2002 DE 10205545**

(43) Veröffentlichungstag der Anmeldung:
**04.06.2003 Patentblatt 2003/23**

(73) Patentinhaber: **Krohne AG**
**4019 Basel (CH)**

(72) Erfinder: **van Klooster, Jeroen Martin, Dipl.-Ing.**
**4003 DJ Tiel (NL)**

(74) Vertreter: **Gesthuysen Patent- und Rechtsanwälte**
**Patentanwälte**
**Postfach 10 13 54**
**45013 Essen (DE)**

(56) Entgegenhaltungen:
**DE-A- 4 443 415    DE-A- 19 812 458**
**DE-A- 19 951 874**

• **PATENT ABSTRACTS OF JAPAN Bd. 0102, Nr. 71 (P-497), 16. September 1986 (1986-09-16) & JP 61 093914 A (SUMITOMO METAL IND LTD), 12. Mai 1986 (1986-05-12)**

**Beschreibung**

Die Erfindung betrifft ein Durchflussmessgerät, mit einem Messrohr, einem Ultraschallwandler, einem Ultraschallwellenleiter und einer Dichtung zum Abdichten des Inneren des Messrohrs von der Umgebung, wobei der Ultraschallwandler außerhalb des Messrohrs mit dem Ultraschallwellenleiter derart verbunden ist, daß von dem Ultraschallwandler erzeugte Ultraschallwellen auf den Ultraschallwellenleiter übertragbar sind bzw. von dem Ultraschallwellenleiter empfangene Ultraschallwellen auf den Ultraschallwandler übertragbar sind, und der Ultraschallwellenleiter wenigstens teilweise in das Messrohr eingeführt ist, und wobei die Dichtung zwischen dem Ultraschallwellenleiter und dem Messrohr angeordnet ist.

Ein solches Durchflußmeßgerät kann z. B. ein Ultraschalldurchflußmeßgerät oder ein Wirbelfrequenzdurchflußmeßgerät sein. Als Ultraschallwandler werden dabei typischerweise Piezokristalle verwendet, mit denen Ultraschallwellen erzeugt bzw. detektiert werden können.

Es gibt Anwendungen, bei denen es möglich ist, bei solchen Durchflußmeßgeräten lediglich einen Ultraschallwandler ohne Ultraschallwellenleiter vorzusehen, wobei mit dem Ultraschallwandler Ultraschallwellen erzeugt bzw. detektiert werden. In einem solchen Fall muß der Ultraschallwandler direkt dort angeordnet sein, wo die Ultraschallwellen eingekoppelt bzw. detektiert werden sollen. Dies ist jedoch insofern problematisch, als daß Piezokristalle, die, wie zuvor ausgeführt, typischerweise für Ultraschallwandler in Durchflußmeßgeräten eingesetzt werden, oberhalb einer bestimmten Temperatur, nämlich der sogenannten Curie-Temperatur, nicht mehr verwendet werden können. Oberhalb der Curie-Temperatur existiert nämlich keine ferroelektrische bzw. ferromagnetische Phase des Kristalls mehr, die Voraussetzung für die piezoelektrischen Eigenschaften des Kristalls ist.

Ist jedoch z. B. das strömende Medium, dessen Durchfluß mit dem Ultraschalldurchflußmeßgerät gemessen werden soll, sehr heiß, so daß dessen Temperatur über der Curie-Temperatur des Piezokristalls liegt, so ist für einen verläßlichen Betrieb eine gewisse thermische Isolierung des Ultraschallwandlers von dem heißen Medium erforderlich. Aus diesem Grund werden bei Durchflußmeßgeräten Ultraschallwandler verwendet, mit denen ein räumlicher Abstand des Ultraschallwandlers von dem heißen Medium hergestellt wird. Solche Ultraschallwellenleiter sollen einerseits eine möglichst gute Wärmeisolierung des Ultraschallwandlers von dem heißen Medium und andererseits eine möglichst verlustfreie und ungestörte Übertragung der Ultraschallwellen gewährleisten. Mit einem solchen Ultraschallwellenleiter können dann also von einem Ultraschallwandler erzeugte Ultraschallwellen in das strömende Medium eingekoppelt werden bzw. von dem Ultraschallwandler aus dem heißen Medium Ultraschallwellen ausgekoppelt werden, während der Ultraschallwandler von dem heißen Medium räumlich entfernt und zumindest in gewissem Maße von diesem thermisch isoliert ist.

In herkömmlichen Durchflußmeßgeräten mit einem Ultraschallwandler und einem diesem zugeordneten Ultraschallwellenleiter werden z. B. solche Ultraschallwellenleiter verwendet, wie in der WO 96/41157 beschrieben. Dabei wird als Ultraschallwellenleiter eine Mehrzahl von zueinander parallelen, sehr dünnen Stäben verwendet, wobei die einzelnen Stabdurchmesser jeweils wesentlich geringer als die Wellenlänge des zu führenden Ultraschallsignals sind. Typischerweise werden dabei die Stäbe eng aneinander anliegend in eine Röhre eingepaßt, die den Stäben seitlich Halt bietet und somit einen Mantel für den Ultraschallwellenleiter darstellt. Auf diese Weise wird ein kompakter Ultraschallwellenleiter realisiert.

Aus der WO 96/41157 ist für einen Ultraschallwellenleiter ferner eine solche Konstruktion bekannt, bei der im wesentlichen kreisförmig gebogene Bleche ineinander mit Abstand zueinander angeordnet sind. Diese kreisförmig gebogenen Bleche befinden sich ebenfalls in einer Röhre, die damit einen äußeren Mantel für den Ultraschallwellenleiter darstellt.

Aus der DE 44 43 415 A1 ist eine Ultraschallwandlerhalterung mit einem Ultraschallwandler zur Anbringung an ein Messrohr bekannt. Zur schalldichten Lagerung des Ultraschallwandlers ist zwischen der Ultraschallwandlerhalterung und dem Messrohr eine Dichtung angeordnet.

Aus der US 4,195,517 ist ein gattungsgemäßes Ultraschalldurchflussmessgerät bekannt.

Außerdem ist aus der EP 1 098 295 ein solcher Ultraschallwellenleiter bekannt, der aus einer zusammengerollten Folie besteht, die mit Paßsitz in eine metallische Röhre eingesteckt ist. Dabei ist vorgesehen, daß zur Übertragung von Ultraschallwellen im Frequenzbereich von 15 kHz bis 20 MHz die Schichtdicke der Folie weniger als 0,1 mm beträgt. Als Material für diese Folie wird typischerweise ein Metall verwendet.

Im allgemeinen wird so vorgegangen, daß der Ultraschallwandler an einem Ende des Ultraschallwellenleiters derart angeordnet wird, daß von dem Ultraschallwandler Ultraschallwellen in den Ultraschallwellenleiter eingekoppelt bzw. von diesem empfangen werden können. Dabei ist der Ultraschallwandler typischerweise direkt, also mit körperlichem Kontakt, auf ein Ende des Ultraschallwellenleiters aufgesetzt. Bei dem zuvor beschriebenen Ultraschallwellenleiter aus einer zusammengerollten Folie gemäß der EP 1 098 295 ist im allgemeinen vorgesehen, daß die Enden des Ultraschallwellenleiters jeweils verschweißt und plangedreht sind. Der Ultraschallwandler befindet sich dann auf dieser verschweißten und plangedrehten Fläche des Ultraschallwellenleiters.

Wie eingangs beschrieben, ist bei den Durchflußmeßgeräten, von denen die Erfindung ausgeht, vorgesehen, daß der Ultraschallwellenleiter wenigstens teilweise in das Meßrohr eingeführt ist. Auf diese Weise ist es möglich, daß der Ultraschallwellenleiter in direkten Kontakt mit dem Medium kommt, in das Ultraschallwellen eingekoppelt bzw. von dem Ultraschallwellen empfangen werden sollen. Nunmehr besteht jedoch das Problem, das Meßrohr mit dem eingeführten Ultraschallwandler nach außen hin abzudichten. Dazu kann so vorgegangen werden, daß entweder der Ultraschallwellenleiter über seinen Mantel direkt in daß Meßrohr eingefügt wird, z. B. durch Verschweißen. Andererseits ist es möglich, den Ultraschallwellenleiter in einen Flansch einzusetzen, z. B. ebenfalls durch Einschweißen, und dann diesen Flansch an einem diesem entsprechenden Flansch am Meßrohr zu befestigen. Die Dichtung erfolgt dann zwischen Flansch und Flansch.

Ist der Ultraschallwellenleiter mittels eines Flansches wenigstens teilweise in das Meßrohr eingeführt, so kann dies auch mittels eines am Meßrohr angeordneten Stutzens erfolgen. Dabei kann der Wellenleiter dann auch so angeordnet sein, daß er nicht über die Außenwand des Meßrohres in dieses hineinreicht. Trotzdem liegt dabei im Sinne der Erfindung eine wenigstens teilweise Einführung des Wellenleiters in das Meßrohr vor, da sich der Wellenleiter in dem durch den Stutzen gebildeten Hohlraum befindet, der unmittelbar mit dem Inneren des Meßrohrs in Verbindung steht. Die Erfindung ist also nicht auf solche Konstruktionen beschränkt, bei denen der Wellenleiter derart wenigstens teilweise in das Meßrohr eingeführt ist, daß er in das Innere des Meßrohrs hineinragt. Der Wellenleiter kann also auch gegenüber dem Meßrohr zurückgezogen sein. Wesentlich ist lediglich, daß der Wellenleiter durch die wenigstens teilweise Einführung in das Meßrohr zumindest mittelbar in Kontakt mit dem durch das Meßrohr fließenden Medium kommt.

Problematisch ist jedoch, daß durch die Anbringung des Flansches am Meßrohr, die typischerweise über einen Stutzen realisiert wird, der schon angesprochene Hohlraum entsteht, der die Strömung des Mediums in dem Meßrohr stören kann. Das Medium kann also in den durch diesen Stutzen gebildeten Hohlraum eindringen und damit bis zu der Dichtung zwischen den Flanschen gelangen, was ferner erfordert, daß diese Dichtung an die Temperatur eines gegebenenfalls sehr heißen Mediums angepaßt sein muß. Damit ist die Materialwahl für diese Dichtung beschränkt, was auch bezüglich der Unterdrückung eines Kreuzkopplung bzw. Nebensprechen genannten Phänomens nachteilig ist.

Bei den in Rede stehenden Durchflußmeßgeräten ist nämlich problematisch, daß von dem Ultraschallwandler erzeugte Ultraschallwellen beim Aussenden nicht nur in den Ultraschallwellenleiter sondern auch in den Mantel eingekoppelt werden, der den Ultraschallwellenleiter umgibt. Entsprechendes gilt, wenn der Ultraschallwandler zur Detektion von Ultraschallwellen vorgesehen ist. Dann gelangen nämlich Ultraschallwellen nicht nur über den Ultraschallwellenleiter sondern auch über den Mantel zum Ultraschallwandler. Somit kommt es dazu, daß nicht nur über die Ultraschallwellenleiter ausgesandten bzw. detektierten Ultraschallwellen sondern auch über den jeweiligen Mantel ausgesandte bzw. empfangene Ultraschallwellen detektiert werden. Ist nun der Ultraschallwellenleiter über seinen Mantel in die Wandung des Meßrohres eingebaut, in der das Medium strömt, dessen Durchfluß bestimmt werden soll, so kommt es dazu, daß nicht nur durch das Medium hindurchtretende Ultraschallwellen, sondern auch solche Ultraschallwellen erfaßt werden, die sich über die Wandung des Rohres hinweg von bzw. zu dem Ultraschallwandler bewegen. Dieses Phänomen der Kreuzkopplung bzw. des Nebensprechens führt gegebenenfalls zu einer Überlagerung oder vollständigen Störung des eigentlich interessierenden Meßsignals.

Die damit verbundene Problematik wird insbesondere dann deutlich, wenn man sich vergegenwärtigt, daß bei dem Übergang von Ultraschallwellen zwischen zwei voneinander verschiedenen Medien für den Transmissionskoeffizienten unter Außerachtlassung von geometrischen Effekten gilt:

$$T = 4 \, (z_1 / z_2) \, / \, (1 + z_1 / z_2)^2.$$

Dabei stellen $z_1$ und $z_2$ die charakteristischen Impedanzen des ersten bzw. des zweiten Mediums dar, zwischen denen der Übergang der Ultraschallwellen erfolgt. Beim Übergang von Stahl in Luft liegt der zuvor genannte Transmissionskoeffizient T bei ca. 0,004 %. Dem entspricht, daß ein wesentlicher Teil der akustischen Energie, nämlich 99,996 %, verlorengeht. Ein maßgeblicher Teil dieser verlorengehenden Energie findet sich in der unerwünschten Kreuzkopplung wieder. Die Kreuzkopplung bestimmt somit im wesentlichen Maße das Signal-zu-Rausch-Verhältnis der in Rede stehenden Durchflußmeßgeräte.

Dementsprechend ist es die Aufgabe der Erfindung, das eingangs beschriebene Durchflußmeßgerät dahingehend zu verbessern, daß Kreuzkopplungen und Nebensprechen weiter verringert werden, während gleichzeitig eine Störung des durch das Meßrohr strömende Mediums so gering wie möglich gehalten wird.

Ausgehend von dem eingangs beschriebenen Durchflußmeßgerät ist die zuvor hergeleitete und aufgezeigte Aufgabe erfindungsgemäß dadurch gelöst, dass die Dichtung eine Packung von Ringdichtungen umfasst, am Ultraschallwellenleiter längs seines Umfangs anliegt, in radialer Richtung auf den Ultraschallwellenleiter wirkt und senkrecht zur Dichtrichtung kraftbeaufschlagt ist und dass die Kraftbeaufschlagung mit einer Packung von Federringen erfolgt. Der Ultraschallwellenleiter ist weder direkt mit dem Meßrohr verbunden, noch ist die Dichtung zwischen einem Flansch, in dem der Ultraschallwellenleiter befestigt ist, und einem diesen entsprechenden Flansch am Meßrohr vorgesehen.

Die Vorgehensweise, daß die Dichtung zwischen dem Ultraschallwellenleiter und dem Meßrohr angeordnet ist, ist aus verschiedenen Gründen vorteilhaft. Einerseits wird durch die Dichtung, die aus einem vom Material des Meßrohrs verschiedenen Material besteht, die Übertragung akustischer Energie gegenüber einem solchen Fall, bei dem der Ultraschallwellenleiter direkt in die Wand des Meßrohrs eingesetzt ist, verschlechtert. Mit anderen Worten wird der Transmissionskoeffizient für diesen Übergang sehr klein. Außerdem ist es durch die Maßnahme möglich, die Dichtung auch bei der Verwendung eines am Meßrohr vorgesehenen Stutzens derart anzubringen, daß praktisch kein zusätzlicher Hohlraum in dem Meßrohr gebildet wird. Somit kommt es praktisch zu keinen Verwirbelungen des durch das Meßrohr strömenden Mediums, was die Meßgenauigkeit des Durchflußmeßgerätes erhöht.

Eine besonders gute Dichtwirkung wird erzielt, wenn erfindungsgemäß die Dichtung in radialer Richtung auf den Ultraschallwellenleiter wirkt. Dazu liegt die Dichtung vorzugsweise an dem Ultraschallwellenleiter längs seines Umfangs an.

Die erfindungsgemäße Dichtungsmaßnahme kann derart ausgeführt sein, daß die Dichtung zwischen dem Ultraschallwellenleiter und dem eigentlichen Meßrohr angeordnet ist. Gemäß einer bevorzugten Weiterbildung der Erfindung ist jedoch vorgesehen, daß das Meßrohr einen Stutzen aufweist, der Ultraschallwellenleiter über den Stutzen in das Meßrohr eingeführt ist und die Dichtung zwischen dem Ultraschallwellenleiter und dem Stutzen angeordnet ist. Dabei kann der Stutzen fest mit dem Meßrohr verbunden sein. Gemäß einer bevorzugten Weiterbildung der Erfindung ist jedoch vorgesehen, daß der Stutzen an dem Meßrohr lösbar befestigt ist. Dies erleichtert die Montage. Die Erfindung betrifft ferner ein Durchflussmessgerät, mit einem Messrohr, einem Ultraschallwandler, einer Ultraschallwandlerhalterung und einer Dichtung, wobei der Ultraschallwandler an der Ultraschallwandlerhalterung derart befestigt ist und die Ultraschallwandlerhalterung derart wenigstens teilweise in das Messrohr eingeführt ist, dass von dem Ultraschallwandler erzeugte Ultraschallwellen über die Ultraschallwandlerhalterung in ein in dem Messrohr fließendes Medium übertragbar sind bzw. aus dem Medium empfangene Ultraschallwellen über die Ultraschallwandlerhalterung auf den Ultraschallwandler übertragbar sind, und wobei die Dichtung zwischen der Ultraschallwandlerhalterung und dem Messrohr angeordnet ist,

Bei diesem Durchflußmeßgerät mit einer Ultraschallwandlerhalterung bestehen ähnliche Probleme wie bei dem eingangs beschriebenen Durchflußmeßgerät mit einem Ultraschallwellenleiter.

Dementsprechend ist es außerdem die Aufgabe der Erfindung, das zuvor beschriebene Durchflußmeßgerät dahingehend zu verbessern, daß Kreuzkopplungen und Nebensprechen weiter verringert werden, während gleichzeitig eine Störung des durch das Meßrohr strömenden Mediums so gering wie möglich gehalten wird.

Ausgehend von dem zuvor beschriebenen Durchflußmeßgerät mit einer Ultraschallwandlerhalterung ist die zuvor aufgezeigte Aufgabe dadurch gelöst, dass die Dichtung eine Packung von Ringdichtungen umfasst, an der Ultraschallwandlerhalterung längs ihres Umfangs anliegt, in radialer Richtung auf die Ultraschallwandlerhalterung wirkt und senkrecht zur Dichtrichtung kraftbeaufschlagt ist und dass die Kraftbeaufschlagung mit einer Packung von Federringen erfolgt.

Gemäß der Erfindung ist auch hier vorgesehen, daß die Dichtung in radialer Richtung auf die Ultraschallwandlerhalterung wirkt. Die Dichtung liegt an der Ultraschallwandlerhalterung längs ihres Umfangs an.

Sowohl für das Durchflußmeßgerät mit einem Ultraschallwellenleiter als auch für das Durchflußmeßgerät mit einer Ultraschallwandlerhalterung gilt, daß die Dichtung gemäß der Erfindung ringförmig ist. Andere Formen der Dichtung sind grundsätzlich möglich, eine ringförmige Dichtung gewährleistet jedoch eine besonders gute Abdichtung. Dabei erfindungsgemäß vorgesehen, daß die Dichtung eine Packung von Ringdichtungen umfaßt. Insbesondere kommt eine solche Packung von Ringdichtungen in Betracht, wie sie z. B. auch in anderen technischen Bereichen als Ventilschaftpackung zur Abdichtung eines sich in Längsrichtung bewegenden Ventilschafts verwendet wird. Dabei ist jedoch nur die Abdichtfunktion der Packung von Ringdichtungen im stationären Zustand von Interesse; das Vermögen von Ventilschaftpackungen auch gegenüber einem sich in Längsrichtung bewegenden Schaft eine Abdichtung zu bewirken ist nicht wesentlich, da der in Rede stehende Ultraschallwellenleiter und die in Rede stehende Ultraschallwandlerhalterung auch im Betrieb des Durchflußmeßgeräts im wesentlichen stationär bleiben, also keine Bewegung ausführen. Lediglich bei Temperaturschwankungen können geringe Verschiebungen auftreten.

Grundsätzlich sind für die Ringdichtungen eine Vielzahl von Materialien einsetzbar. Gemäß einer bevorzugten Weiterbildung der Erfindung bestehen die Ringdichtungen jedoch aus Graphit, Polytetrafluorethylen (PTFE) und/oder Perfluorelastomer. Diese Materialien haben sich insbesondere bei sehr heißen und/oder chemisch aggressiven Medien bewährt.

Beim Vorsehen einer oder mehrerer Ringdichtungen sind für die Abdichtung grundsätzlich keine weiteren Maßnahmen erforderlich. Gemäß der Erfindung ist jedoch vorgesehen, daß die eine oder mehrere Ringdichtung aufweisende Dichtung senkrecht zur Dichtrichtung kraftbeaufschlagt ist. Dies erfolgt durch eine Packung von Federringen, die derart angeordnet ist, daß sie, auf der der Dichtung abgewandten Seite durch ein Widerlager gehalten, von oben bzw. von unten auf die ebenfalls durch ein Widerlager fixierte Dichtung drücken. Auf diese Weise wird das Material der Dichtung längs der Richtung der ausgeübten Kraft komprimiert, und das Material der Dichtung weicht senkrecht dazu, also nach innen und nach außen, aus, so daß die Dichtwirkung durch Druck auf den Ultraschallwellenleiter bzw. die Ultraschallwandlerhalterung verbessert wird. Gemäß einer bevorzugten Weiterbildung der Erfindung erfolgt eine weitere Verbesserung der Dichtwirkung bei kraftbeaufschlagter Dichtung dadurch, daß die Ringdichtungen im Querschnitt V-förmig sind. Durch die V-Form wird der zuvor beschriebene Effekt des Ausweichens des Materials der Dichtung nach innen bzw. außen erleichtert, so daß die Abdichtung noch weiter verbessert wird. Andererseits sind auch gute Erfahrungen gemacht worden mit Dichtungen, die im Querschnitt dreieckförmig sind.

Im einzelnen gibt es nun eine Vielzahl von Möglichkeiten, die erfindungsgemäßen Durchflußmeßgeräte auszugestalten und weiterzubilden. Dazu wird auf die den unabhängigen Patentansprüchen nachgeordneten Patentansprüche sowie auf die nachfolgende detaillierte Beschreibung bevorzugte Ausführungsbeispiele der Erfindung unter Bezugnahme auf die Zeichnung verwiesen. In der Zeichnung zeigt

Fig. 1    eine Anordnung eines Ultraschallwandlers mit einem Ultraschallwellenleiter in einem Meßrohr eines Durchflußmeßgeräts gemäß einem ersten bevorzugten Ausführungsbeispiel der Erfindung,

Fig. 2    eine Anordnung eines Ultraschallwandlers mit einem Ultraschallwellenleiter in einem Stutzen eines Meßrohrs gemäß einem zweiten bevorzugten Ausführungsbeispiel der Erfindung und

Fig. 3    eine Anordnung eines Ultraschallwandlers mit einer Ultraschallwandlerhalterung in einem Meßrohr eines Durchflußmeßgeräts gemäß einem dritten bevorzugten Ausführungsbeispiel der Erfindung.

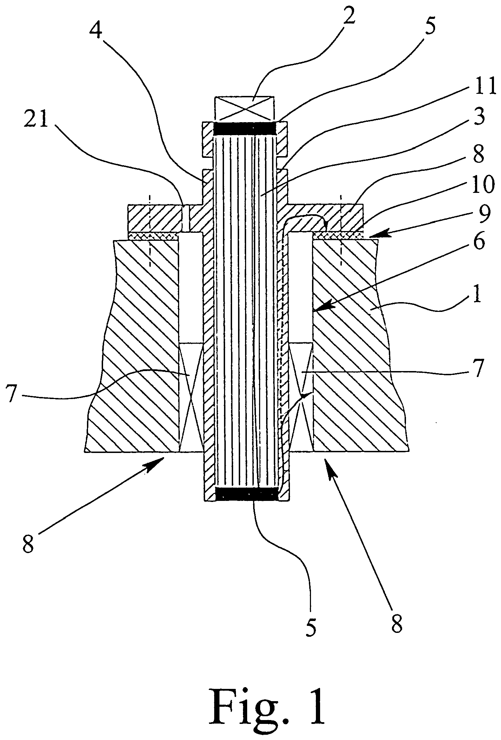

Aus Fig. 1 ist ein Bereich eines Meßrohrs 1 ersichtlich, in dem von einem Ultraschallwandler 2 erzeugte Ultraschallwellen über einen Ultraschallwellenleiter 3 in das Meßrohr eingekoppelt werden können. Der Ultraschallwellenleiter 3 besteht aus einer dünnen, zusammengerollten Metallfolie, deren Dicke bei ca. 0,1 mm liegt. Diese Metallfolie ist von einem Mantel 4 umgeben, der den Ultraschallwellenleiter 3 seitlich nach außen hin abschließt. Dieser Mantel 4 des Ultraschallwellenleiters 3 ist ebenfalls aus Metall. Die Enden der dünnen, zusammengerollten Metallfolie 5 sind plangedreht und verschweißt. Außerhalb des Meßrohrs 1 ist auf dem dortigen Ende 5 des Ultraschallwellenleiters 3 der Ultraschallwandler 2 angeordnet.

Zur Abdichtung ist zwischen dem Mantel 4 des Ultraschallwellenleiters 3 einerseits und der Innenwand einer in dem Meßrohr 1 vorgesehenen Ausnehmung 6 andererseits eine Dichtung 7 vorgesehen. Bei der Dichtung 7 handelt es sich um eine Packung von Ringdichtungen, die in radialer Richtung einerseits auf den Mantel 4 des Ultraschallwellenleiters 3 und andererseits auf die Innenwand der Ausnehmung 6 wirken. Die Dichtung 7 schließt am inneren Ende der Ausnehmung 6 in dem Meßrohr 1 genau mit den angrenzenden Bereichen 8 des Meßrohrs 1 ab. Auf diese Weise ist die Ausnehmung 6 im Meßrohr 1 für das durch das Meßrohr 1 strömende und nicht weiter dargestellte Medium nicht spürbar. Eine Störung der Strömung des Mediums durch die Ausnehmung 6 erfolgt also nicht. Eine gewisse, geringe Störung erfolgt lediglich dadurch, daß der Ultraschallwellenleiter 3 in einem kurzen Bereich in das strömende Medium hineinreicht.

Neben der Dichtung 7 ist zwischen einem an dem Mantel 4 des Ultraschallwellenleiters 3 befestigten Flansch 8 und der Außenseite 9 des Meßrohrs 1 ein Entkopplungsring 10 vorgesehen. Dieser Entkopplungsring 10 muß nicht der Abdichtung des Meßrohrs 1 gegenüber der Umgebung dienen; die Abdichtung des Meßrohrs 1 wird ja schon von der Dichtung 7 übernommen. Außerdem ist der Raum zwischen dem Flansch 8 und der Dichtung 7 vorzugsweise belüftet, also nicht abgedichtet, wozu eine Belüftungsöffnung 21 in dem Flansch 8 vorgesehen ist.

Bei dieser Konstruktion ist ferner wesentlich, daß der Entkopplungsring 10 nicht mit dem Medium in Kontakt kommt, so daß der Entkopplungsring 10 weder gegen chemisch aggressive Substanzen resistent noch besonders hitzebeständig sein muß. Man ist also in der Materialwahl für den Entkopplungsring 10 sehr frei, so daß insbesondere ein solches Material für den Entkopplungsring 10 gewählt werden kann, das eine nur geringe Transmission für über den Mantel 4 und den Flansch 8 bzw. das Meßrohr 1 kommende akustische Energie aufweist. Kreuzkopplung bzw. Nebensprechen über diesen Weg wird somit sehr stark unterdrückt.

Kreuzkopplung bzw. Nebensprechen wird jedoch auch dadurch unterdrückt, daß die Abdichtung mittels der Dichtung 7 erfolgt, die eine Packung von Ringdichtungen umfaßt. Es hat sich nämlich gezeigt, daß die Transmission akustischer Energie von dem Mantel 4 des Ultraschallwellenleiters 3 über eine solche Dichtung 7 in das Meßrohr 1 nur sehr gering ist. Die geringe Transmission akustischer Energie durch die Dichtung 7 hindurch bzw. durch den Entkopplungsring 10 hindurch ist in Fig. 1 jeweils durch dort endende Pfeile angegeben, die den Verlauf von von dem Ultraschallwandler 2 her kommenden Ultraschallwellen darstellen.

Im übrigen ist in dem Mantel 4 des Ultraschallwellenleiters 3, wie aus Fig. 1 ersichtlich, an dem dem Ultraschallwandler 2 zugewandten Ende eine über den gesamten Umfangsbereich des Ultraschallwandlers 3 verlaufende Nut 11 vorgesehen. Diese Nut 11 erstreckt sich über die gesamte Dicke des Mantels 4 und bewirkt, daß, wie mit den Pfeilen angedeutet, ein Einkoppeln akustischer Energie direkt in den Mantel 4 im Bereich des Ultraschallwandlers 2 nicht möglich ist. Jegliche akustische Energie, die über den Mantel 4 und anschließend durch die Dichtung 7 bzw. den Entkopplungsring 10 hindurch in das Meßrohr gelangt, muß also die gesamte Länge des Ultraschallwandlers 3 durchlaufen. Damit ist die Laufstrecke der die Kreuzkopplung bewirkenden Ultraschallwellen wesentlich länger als die Laufstrecke des eigentlichen Meßsignals, so daß das von der Kreuzkopplung herrührende Störsignal zeitlich wesentlich nach dem eigentlichen Meßsignal erwartet werden kann. Auf diese Weise ist die Diskriminierung des Meßsignals gegenüber Störungen, die von einer Kreuzkopplung herrühren, wesentlich erleichtert.

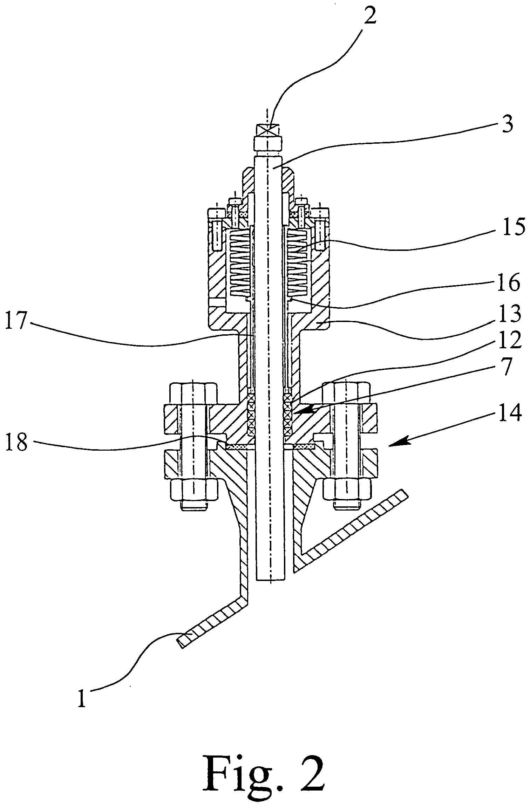

Aus Fig. 2 ist eine Anordnung mit einem Ultraschallwandler 2, einem Ultraschallwellenleiter 3 und einer Dichtung 7 aus einer Packung von hier im einzelnen dargestellten Ringdichtungen 12 ersichtlich. Die Ringdichtungen 12 bestehen vorliegend vorzugsweise aus Graphit, PTFE oder Perfluorelastomer. Bei dieser aus Fig. 2 ersichtlichen Anordnung gemäß einem zweiten bevorzugten Ausführungsbeispiel der Erfindung ist der Ultraschallwandler 2 mit dem Ultraschallwellenleiter 3 über einen Stutzen 13 an dem Meßrohr befestigt. Der Stutzen 13 ist seinerseits über eine Flanschverbindung 14 mit dem Meßrohr 1 lösbar verbunden.

Bei der Erfindung ist ferner wesentlich, daß die Ringdichtungen 12 von oben her kraftbeaufschlagt sind. Oberhalb der Ringdichtungen 12 ist nämlich eine Packung von Federringen 15 vorgesehen, die über ein mit einem Anschlag 16 versehenes Rohr 17 auf die oberste Ringdichtung 12 drücken. Die auf diese Weise erfolgende Komprimierung der Ringdichtungen 12 bewirkt ein Ausdehnen des Materials der Ringdichtungen 12 nach innen bzw. nach außen, so daß die Dichtwirkung auf den Ultraschallwellenleiter 3 bzw. den Innenbereich des Stutzens 13 erhöht wird. Die Abdichtung bei der Flanschverbindung 14 erfolgt mit einem Dichtring 18.

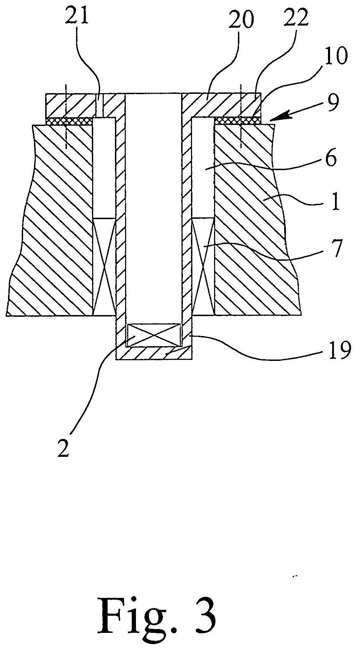

Aus Fig. 3 ist schließlich eine Anordnung gemäß einem dritten bevorzugten Ausführungsbeispiel der Erfindung ersichtlich. Bei dieser Anordnung ist kein Ultraschallwellenleiter, sondern eine Ultraschallwandlerhalterung 19 vorgesehen, mittels derer der Ultraschallwandler 2 räumlich sehr nahe an das durch das Meßrohr 1 fließende Medium gebracht werden kann. Eine solche Anordnung ist natürlich nur dann einsetzbar, wenn das durch das Meßrohr 1 strömende Medium nicht zu heiß ist, also bei der Verwendung eines Piezokristalls für den Ultraschallwandler 2 dessen Curie-Temperatur nicht übersteigt.

Die Abdichtung erfolgt vorliegend mit einer Dichtung 7, die zwischen der Innenwand einer Ausnehmung 6 im Meßrohr 1 und der Außenwand der Ultraschallwandlerhalterung 19 angeordnet ist. Bei dieser Dichtung 7 handelt es sich ebenfalls um eine Packung von Ringdichtungen, die vorliegend jedoch nicht im einzelnen dargestellt sind. Wiederum ist die Dichtung 7 derart angeordnet, daß die Ausnehmung 6 im Meßrohr 1 keinen Hohlraum bildet, der für das durch das Meßrohr 1 strömende Medium eine Störung bewirken könnte.

Schließlich sind auch bei dem vorliegend beschriebenen dritten bevorzugten Ausführungsbeispiel der Erfindung eine Belüftungsöffnung 21 und ein Entkopplungsring 10 vorgesehen, wobei der Entkopplungsring 10 zwischen einem an der Ultraschallwandlerhalterung 19 angebrachten Flansch 22 einerseits und der Außenseite 9 des Meßrohrs 1 andererseits angebracht ist. Entsprechend der Funktionsweise der zuvor geschilderten bevorzugten Ausführungsbeispiele der Erfindung erfolgt auch hier eine effektive Dämpfung der durch die Dichtung 7 bzw. den Entkopplungsring 10 hindurchtretende akustische Energie, was Kreuzkopplungseffekte minimiert.

## Patentansprüche

1. Durchflussmessgerät, mit einem Messrohr (1), einem Ultraschallwandler (2), einem Ultraschallwellenleiter (3) und einer Dichtung (7) zum Abdichten des Inneren des Messrohrs (1) von der Umgebung, wobei der Ultraschallwandler (2) außerhalb des Messrohrs (1) mit dem Ultraschallwellenleiter (3) derart verbunden ist, daß von dem Ultraschallwandler (2) erzeugte Ultraschallwellen auf den Ultraschallwellenleiter (3) übertragbar sind bzw. von dem Ultraschallwellenleiter (3) empfangene Ultraschallwellen auf den Ultraschallwandler (2) übertragbar sind, und der Ultraschallwellenleiter (3) wenigstens teilweise in das Messrohr (1) eingeführt ist, und wobei die Dichtung (7) zwischen dem Ultraschallwellenleiter (3) und dem Messrohr (1) angeordnet ist, **dadurch gekennzeichnet, dass** die Dichtung (7) eine Packung von Ringdichtungen (12) umfasst, am Ultraschallwellenleiter (3) längs seines Umfangs anliegt, in radialer Richtung auf den Ultraschallwellenleiter (3) wirkt und senkrecht zur Dichtrichtung kraftbeaufschlagt ist und dass die Kraftbeaufschlagung mit einer Packung von Federringen (15) erfolgt.

2. Durchflussmessgerät nach Anspruch 1, **dadurch gekennzeichnet, dass** das Messrohr (1) einen Stutzen (13) aufweist, der Ultraschallwellenleiter (3) über den Stutzen (13) in das Messrohr (1) eingeführt ist und die Dichtung (7) zwischen dem Ultraschallwellenleiter (3) und dem Stutzen (13) angeordnet ist.

3. Durchflussmessgerät nach Anspruch 2, **dadurch gekennzeichnet, dass** der Stutzen (13) an dem Messrohr (1) lösbar befestigt ist.

4. Durchflussmessgerät, mit einem Messrohr (1), einem Ultraschallwandler (2), einer Ultraschallwandlerhalterung (19) und einer Dichtung (7), wobei der Ultraschallwandler (2) an der Ultraschallwandlerhalterung (19) derart befestigt ist und die Ultraschallwandlerhalterung (19) derart wenigstens teilweise in das Messrohr (1) eingeführt ist, dass von dem Ultraschallwandler (2) erzeugte Ultraschallwellen über die Ultraschallwandlerhalterung (19) in ein in dem Messrohr (1) fließendes Medium übertragbar sind bzw. aus dem Medium empfangene Ultraschallwellen über die Ultraschallwandlerhalterung (19) auf den Ultraschallwandler (2) übertragbar sind, und wobei die Dichtung (7) zwischen der Ultraschallwandlerhalterung (19) und dem Messrohr (1) angeordnet ist,

**dadurch gekennzeichnet,**

**dass** die Dichtung (7) eine Packung von Ringdichtungen umfasst, an der Ultraschallwandlerhalterung (19) längs ihres Umfangs anliegt, in radialer Richtung auf die Ultraschallwandlerhalterung (19) wirkt und senkrecht zur Dichtrichtung kraftbeaufschlagt ist und dass die Kraftbeaufschlagung mit einer Packung von Federringen (15) erfolgt.

5. Durchflussmessgerät nach einem der Ansprüche 1 bis 4, **dadurch gekennzeichnet, dass** die Ringdichtungen (12) aus Graphit, PTFE und/oder Perfluorelastomer sind.

6. Durchflussmessgerät nach einem der Ansprüche 1 bis 5, **dadurch gekennzeichnet, dass** die Ringdichtungen (12) im Querschnitt V-förmig oder dreieckförmig sind.

**Claims**

1. Flowmeter, with a measuring tube (1), an ultrasound transducer (2), an ultrasound waveguide (3) and a seal (7) for sealing the inside of the measuring tube (1) from the environment, wherein the ultrasound transducer (2) is connected outside the measuring tube (1) to the ultrasound waveguide (3) in such fashion that ultrasound waves generated by the ultrasound transducer (2) can be transferred to the ultrasound waveguide (3) or, respectively, ultrasound waves received by the ultrasound waveguide (3) are transferred to the ultrasound transducer (2), and the ultrasound waveguide (3) is at least partially inserted in the measuring tube (1), and wherein the seal (7) is arranged between the ultrasound waveguide (3) and the measuring tube (1),

**characterized in**

**that** the seal (7) is comprised of a set of ring seals (12), is applied to fit longitudinally against the perimeter of the ultrasound waveguide (3), is effective on the ultrasound waveguide (3) in a radial direction, and is pressure-loaded in a vertical direction relative to the plane of the seal, and that the pressure-loading is accomplished by means of a set of spring washers (15)

2. Flowmeter according to claim 1, **characterized in that** the measuring tube (1) has an adapter (13), the ultrasound waveguide (3) is inserted in the measuring tube (1) by way of the adapter (13), and the seal (7) is positioned between the ultrasound waveguide (3) and the adapter (13).

3. Flowmeter according to claim 2, **characterized in that** the adapter (13) is attached to the measuring tube (1) in a removable fashion.

4. Flowmeter, with a measuring tube (1), an ultrasound transducer (2), an ultrasound transducer mount (19) and a seal (7), wherein the ultrasound transducer (2) is attached to the ultrasound transducer mount (19) and the ultrasound transducer mount (19) is inserted at least partly in the measuring tube (1) in such fashion that ultrasound waves generated by the ultrasound transducer (2) can be transmitted via the ultrasound transducer mount (19) into a medium flowing through the measuring tube (1) or, respectively, ultrasound waves received from the medium can be transferred via the ultrasound transducer mount (19) to the ultrasound transducer (2),

**characterized in**

**that** the seal (7) is comprised of a set of ring seals, is applied to fit longitudinally against the perimeter of the ultrasound transducer mount (19), is effective on the ultrasound transducer mount (19) in a radial direction, and is pressure-loaded in a vertical direction relative to the plane of the seal, and that the pressure-loading is accomplished by means of a set of spring washers (15).

5. Flowmeter according to any one of claims 1 to 4, **characterized in that** the ring seals (12) are of graphite, PTFE and/or perfluoroelastomer.

6. Flowmeter according to any one of claims 1 to 5, **characterized in that** ring seals (12) have a V-flared or triangular cross section.

**Revendications**

1. Appareil de mesure de débit, présentant un tube de mesure (1), un convertisseur (2) d'ultrasons, un guide (3) d'ondes ultrasoniques et un joint d'étanchéité (7) qui assure l'étanchéité de l'intérieur du tube de mesure (1) vis-à-vis de l'environnement,

le convertisseur (2) d'ultrasons étant relié au guide (3) d'ondes ultrasoniques à l'extérieur du tube de mesure (1) de telle sorte que les ondes ultrasoniques formées par le convertisseur (2) d'ultrasons puissent être transférées sur le guide (3) d'ondes ultrasoniques ou que les ondes ultrasoniques reçues par le guide (3) d'ondes ultrasoniques puissent être transférées sur le convertisseur (2) d'ultrasons,

le guide (3) d'ondes ultrasoniques étant inséré au moins en partie dans le tube de mesure (1) et le joint d'étanchéité (7) étant disposé entre le guide (3) d'ondes ultrasoniques et le tube de mesure (1), **carac-**

**térisé en ce que**

le joint d'étanchéité (7) comporte un empilement de joints d'étanchéité (12), repose par sa périphérie sur le guide (3) d'ondes ultrasoniques, agit dans la direction radiale sur le guide (3) d'ondes ultrasoniques et applique une force perpendiculairement à la direction d'étanchéité et

**en ce que** l'application de la force s'effectue par un paquet d'anneaux élastiques (15).

2. Appareil de mesure de débit selon la revendication 1, **caractérisé en ce que** le tube de mesure (1) présente une tubulure (13), **en ce que** le guide (3) d'ondes ultrasoniques est inséré dans le tube de mesure (1) par l'intermédiaire de la tubulure (13) et **en ce que** le joint d'étanchéité (7) est disposé entre le guide (3) d'ondes ultrasoniques et la tubulure (13).

3. Appareil de mesure de débit selon la revendication 2, **caractérisé en ce que** la tubulure (13) est fixée de manière libérable sur le tube de mesure (1).

4. Appareil de mesure de débit présentant un tube de mesure (1), un convertisseur (2) d'ultrasons, un support (19) de convertisseur d'ultrasons et un joint d'étanchéité (7),

le convertisseur (2) d'ultrasons étant fixé sur le support (19) de convertisseur d'ultrasons et le support (19) de convertisseur d'ultrasons étant inséré au moins en partie dans le tube de mesure (1) de telle sorte que les ondes ultrasoniques formées par le convertisseur (2) d'ultrasons puissent être transférées par l'intermédiaire du support (19) de convertisseur d'ultrasons dans un fluide qui s'écoule dans le tube de mesure (1) ou que les ondes ultrasoniques reçues en provenance du fluide puissent être transférées par l'intermédiaire du support (19) de convertisseur d'ultrasons au convertisseur (2) d'ultrasons, le joint d'étanchéité (7) étant disposé entre le support (19) de convertisseur d'ultrasons et le tube de mesure (1),

**caractérisé en ce que**

le joint d'étanchéité (7) comporte un empilement de joints d'étanchéité annulaires, repose par sa périphérie sur le support (19) de convertisseur d'ultrasons, agit dans la direction radiale sur le support (19) de convertisseur d'ultrasons et applique une force perpendiculairement à la direction d'étanchéité et **en ce que** l'application de la force s'effectue à l'aide d'un empilement d'anneaux élastiques (15).

5. Appareil de mesure de débit selon l'une des revendications 1 à 4, **caractérisé en ce que** les joints d'étanchéité annulaires (12) sont réalisés en graphite, en PTFE et/ou en élastomère perfluoré.

6. Appareil de mesure de débit selon l'une des revendications 1 à 5, **caractérisé en ce que** les joints d'étanchéité annulaires (12) ont en coupe transversale la forme d'un V ou d'un triangle.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9641157 A
- DE 4443415 A1

- US 4195517 A
- EP 1098295 A